# EUROPÄISCHE PATENTSCHRIFT

(11) **EP 2 725 252 B1**
(45) Veröffentlichungstag und Bekanntmachung des Hinweises auf die Patenterteilung: **14.12.2016**
(21) Anmeldenummer: 13189799.3
(22) Anmeldetag: 23.10.2013
(51) Int. Cl.: F16D 48/06

(54) **Verfahren zur Ermittlung eines Einstellparameters für eine hydraulische Aktuatoranordnung in einem Kraftfahrzeugantriebsstrang**
Method for determining a configuration parameter for a hydraulic actuator assembly in a motor vehicle drive train
Procédé de détermination d'un paramètre de réglage pour un agencement d'actionneur hydraulique dans une chaîne cinématique de véhicule automobile

(30) Priorität: 24.10.2012 DE 102012021211
(43) Veröffentlichungstag der Anmeldung: 30.04.2014
(73) Patentinhaber: GETRAG Getriebe- und Zahnradfabrik Hermann Hagenmeyer GmbH & Cie KG, 74199 Untergruppenbach (DE)
(72) Erfinder: Meissner, Jörg, 74626 Bretzfeld (DE); Moosmann, Hans-Peter, 78144 Schramberg (DE)
(74) Vertreter: Witte, Weller & Partner Patentanwälte mbB

(56) Entgegenhaltungen:
- EP-A1- 2 386 774
- DE-A1-102009 029 414
- DE-A1-102009 053 693
- DE-A1-102010 023 374

## Beschreibung

Die vorliegende Erfindung betrifft ein Verfahren zur Ermittlung eines Einstellparameters für eine hydraulische Aktuatoranordnung in einem Kraftfahrzeugantriebsstrang, wobei die Aktuatoranordnung eine Pumpe und einen hydraulischen Zylinder aufweist und ein Druckanschluss der Pumpe mit einem Anschluss des Hydraulikzylinders verbunden ist, wobei der Einstellparameter eine Funktion des Volumens des Fluides ist, das von der Pumpe zur Einrichtung eines vorbestimmten Betriebspunktes des Aktuatoranordnung zu fördern ist, wobei der Betriebspunkt durch ein Wertepaar eines Betriebspunkt-Drehzahlwertes der Pumpe und eines Betriebspunkt-Ansteuerwertes der Pumpe definiert ist.

Ferner betrifft die vorliegende Erfindung ein Verfahren zum Betätigen einer Reibkupplung eines Kraftfahrzeugantriebsstranges mittels einer hydraulischen Aktuatoranordnung eingangs genannter Art, wobei die Reibkupplung mit einem Kolben des Hydraulikzylinders gekoppelt ist und wobei ein Betriebspunkt der Aktuatoranordnung, der einem Betriebspunkt der Reibkupplung entspricht.

Derartige Hydraulikaktuatoren werden insbesondere zum automatischen Einlegen von Gängen im automatisierten Getriebe für Kraftfahrzeuge oder zum automatischen Betätigen von Kupplungen innerhalb eines Antriebsstrangs eines Kraftfahrzeugs verwendet. Die zu betätigenden Elemente weisen dabei in der Regel bestimmte Betriebspunkte auf, an denen beispielsweise ein Gang eingelegt ist oder eine Kupplung beginnt, ein erstes Drehmoment zu übertragen. Diese Betriebpunkte müssen dabei durch die Aktuatoren möglichst schnell und präzise angefahren und eingestellt werden.

Aufgrund von Verschleiß und Abnützung sind diese Betriebspunkte jedoch laufend Änderungen unterworfen, die oft bereits während des Betriebs ausgeglichen werden müssen, um einen effizienten und komfortablen Betrieb zu ermöglichen. Auch äußere Bedingungen, bspw. durch Temperaturänderungen, haben Einfluss auf den aktuellen Betriebspunkt eines zu betätigenden Elements. Dies bezieht sich dabei nicht nur auf die zu betätigenden Elemente, sondern auch auf die Aktuatoranordnungen selbst. Die ansteuernden Aktuatoren müssen folglich kontinuierlich während des laufenden Betriebs an die geänderten Betriebspunkte angepasst werden.

Ein ganz wesentlicher Betriebspunkt in einem Kraftfahrzeugantriebsstrang ist bspw. der Einrückpunkt der Reibkupplung, die den Antrieb mit dem Getriebe verbindet und in einem automatisierten Antriebsstrang durch eine eingangs genannte Aktuatoranordnung betätigt wird. In der Fachsprache wird dieser Betriebspunkt oft als Kisspoint bezeichnet und das entsprechende Verfahren zur Ermittlung dieses Punktes Kisspoint-Adaption. Der Kisspoint ist dabei als der Punkt definiert, an dem die schließende Reibkupplung ein erstes, geringes Drehmoment in der Größenordnung kleiner 10Nm überträgt. Um eine weiches und komfortables Einkuppeln zu ermöglichen, ist dieser Punkt bei einem automatisierten Getriebe möglichst genau zu bestimmen und anschließend durch die Aktuatoranordnung präzise anzusteuern. Ein Verfahren zur Kisspoint-Adaption ist beispielsweise aus DE 196 52 244 A1 bekannt.

Ein weiteres Verfahren zur Ermitteln des Betriebspunktes einer automatisch betätigten Reibkupplung wird in DE 102 44 393 A1 offenbart. Hierbei werden am betätigenden Aktuator die unterschiedlichen Druckverläufe an einem Hydraulikzylinder gemessen und anhand der so aufgenommenen Kennlinie der Betriebspunkt bestimmt. Die Aktuatoranordnung weist hierzu verschiedene Drucksensoren aus, die über ein Steuergerät ausgewertet werden.

Die DE 10 2007 057 081 B4 zeigt ein weiteres Kisspoint-Adaptions-Verfahren, bei dem zur Bestimmung des Kisspoint auf Drehzahlmessungen an den entsprechenden Wellen im Antriebsstrang zurückgegriffen wird. Eine Messung des Drucks in den betätigenden Aktuatoren ist dabei nicht nötig.

Die US 5,853,076 beschreibt ein Verfahren, wie eine Aktuatoranordnung entsprechend der zuvor beschriebenen Adaptionsverfahren, kontinuierlich nachgeregelt werden kann. Das Verfahren nutzt dabei die Tatsache, dass bereits für die Kisspoint-Adaption Drucksensoren in der Aktuatoranordnung vorhanden sind, mit denen sich die Druckverläufe in den Hydraulikzylindern, die die Kupplung betätigen, messen lassen. Anhand der so gewonnenen Messwerte kann die Aktuatoranordnung nachgeregelt werden.

Nachteilig an den bekannten Einstellverfahren für hydraulischen Aktuatoranordnung ist jedoch, dass sie in Abhängigkeit der Druckverhältnisse am Hydraulikzylinder geregelt werden und somit immer die Messung des Drucks an den Zylinder voraussetzen. Dies erfordert zwangsläufig zusätzliche Drucksensoren innerhalb der Aktuatoranordnungen, die bei manchen Kisspoint-Adaptions-Verfahren jedoch nicht mehr nötig sind.

Vor diesem Hintergrund ist es die Aufgabe der vorliegenden Erfindung, ein verbessertes Einstellverfahren für eine Aktuatoranordnung anzugeben, welches ohne zusätzliche Sensoren auskommen kann, sowie ein verbessertes Verfahren zum zum Betätigen einer Reibkupplung, auf Basis einer derartigen Aktuatoranordnung.

Diese Aufgabe wird zum einen gelöst durch ein Verfahren zur Ermittlung eines Einstellparameters für eine hydraulische Aktuatoranordnung in einem Kraftfahrzeugantriebsstrang, wobei die Aktuatoranordnung eine Pumpe und einen hydraulischen Zylinder aufweist und ein Druckanschluss der Pumpe mit einem Anschluss des Hydraulikzylinders verbunden ist, wobei der Einstellparameter eine Funktion des Volumens des Fluides ist, das von der Pumpe zur Einrichtung eines vorbestimmten Betriebspunktes des Aktuatoranordnung zu fördern ist, wobei der Betriebspunkt durch ein Wertepaar eines Betriebspunkt-Drehzahlwertes der Pumpe und eines Betriebspunkt-Ansteuerwertes der Pumpe definiert ist, mit den Schritten:
- Einregeln der Pumpe auf den Betriebspunkt-Drehzahlwert, so dass die Pumpe einen dem Betriebspunkt-Drehzahlwert entsprechenden Fluidvolumenstrom fördert; und
- Integrieren des Fluidvolumenstromes über die Zeit, bis zu einem Abschluss-Betriebszustand der Aktuatoranordnung, bei dem der Ansteuerwert der Pumpe kleiner gleich dem Betriebspunkt-Ansteuerwert ist.

Ferner wird die obige Aufgabe gelöst durch ein Verfahren zum Betätigen einer Reibkupplung eines Kraftfahrzeugantriebsstranges mittels einer hydraulischen Aktuatoranordnung, die eine Pumpe und einen Hydraulikzylinder aufweist, wobei ein Druckanschluss der Pumpe mit einem Anschluss des Hydraulikzylinders verbunden ist, wobei die Reibkupplung mit einem Kolben des Hydraulikzylinders gekoppelt ist und wobei ein Betriebspunkt der Aktuatoranordnung, der einem Betriebspunkt der Reibkupplung entspricht, unter Verwendung eines Einstellparameters eingestellt wird, der mit oben genannten Ermittlungsverfahren ermittelt worden ist.

Der Erfindung liegt somit die Idee zugrunde, anhand von Betriebspunktwerten, die bspw. durch eine Kisspoint-Adaption gewonnen worden sind, das benötigte Volumen für die Füllung des betätigenden Hydraulikzylinders zu messen, ohne zusätzliche Sensoren im Aktuator einbringen zu müssen. Dazu wird die Zeit und die Drehzahl gemessen bis der Hydraulikzylinder zum Erreichen des aktuellen Betriebspunks gefüllt ist. Mittels der Pumpenkennlinie kann aus der gemessenen Zeitdauer und der Drehzahl das Füllvolumen bestimmt werden, welches bspw. als Einstellparameter für eine Vorsteuerung genutzt werden kann. Ein zusätzlicher Drucksensor ist somit optional und wird vorzugsweise für das genannte Verfahren nicht mehr benötigt.

Insbesondere bei modernen Kisspoint-Adaptions-Verfahren, die andere Parameter als den Druck in dem betätigenden Hydraulikzylinder zur Abstimmung heranziehen, kann vollständig auf zusätzliche Drucksensoren verzichtet werden. Folglich wird eine einfachere, kleinbauende und folglich kostengünstige Herstellung der Aktuatoranordnung möglich.

Die im Rahmen des Ermittlungsverfahrens verwendete Aktuatoranordnung lässt sich vorzugsweise ohne teure und komplexe Druckregelventile realisieren. Denn der Druck in dem Hydraulikzylinder kann generell über die Drehzahl der Pumpe eingestellt werden. Die Pumpe ist dabei vorzugsweise mit einem Elektromotor gekoppelt.

Da Druckregelventile insbesondere in Form von Proportionalventilen nicht notwendig sind, können bei der Monatage der Aktuatoranordnung zudem die Reinheitsanforderungen und folglich die Kosten gering sein.

Die oben genannte Aufgabe ist somit vollständig gelöst.

In einer bevorzugten Ausgestaltung des Parametrisierungsverfahrens weist der Einstellparameter das durch den Integrationsschritt erfasste Fluidvolumen auf.

Der Volumenstrom der Pumpe ist abhängig von der Drehzahl der Pumpe und durch die Kennlinie der Pumpe vorgegeben. Durch Integration dieser Funktion über die Füllzeit ergibt sich unmittelbar das Volumen, welches zum Erreichen des zu betätigenden Betriebspunkt in den Hydraulikzylinder geströmt ist. Der ermittelte Parameter kann unmittelbar zurück an die Vorsteuerung geführt werden. Anhand eines Soll-Ist-Abgleichs kann anschließend der Füllvorgang angepasst werden.

In einer weiteren bevorzugten Ausgestaltung weist der Einstellparameter die zum Erreichen des Abschluss-Betriebszustandes benötigte Füllzeit auf.

Bei dieser Ausgestaltung ist es möglich, neben dem gemessenen Volumen auch noch die benötigte Füllzeit als Parameter an die Vorsteuerung zurückzuführen. Dieser Parameter kann bspw. auch für eine verbesserte Kisspoint-Adaption herangezogen werden.

In einer weiteren bevorzugten Ausgestaltung wird der Abschluss-Betriebszustand, bei dem der Integrationsschritt beendet wird, erreicht, wenn ein Abschluss-Ansteuerwert der Pumpe, der kleiner gleich dem Betriebspunkt-Ansteuerwert ist, erreicht ist, und wenn eine definierte Mindestfüllzeit überschritten ist.

Bei dieser Ausgestaltung wird der Abschluss-Betriebszustand so definiert, dass er sich aus den Werten des Betriebspunktes bestimmt. Weiterhin wird eine Mindestfüllzeit definiert, die überschritten sein muss, damit die Integration beendet wird. Dies verhindert, dass der Betriebspunkt-Ansteuerwert beim Starten der Pumpe durch Schwankungen des Ansteuerwertes überschritten wird.

In einer weiteren bevorzugten Ausgestaltung des Parametrisierungsverfahrens ist der Druckanschluss der Pumpe über eine Blende mit einem Niederdruckabschnitt der Aktuatoranordnung verbunden.

In dieser Ausgestaltung befindet sich eine zusätzlich Blende im Regelkreis. Das Einbringen einer Blende zwischen dem Druckanschluss der Pumpe und einem Tank der Aktuatoranordnung führt zu einer verbesserten Regelbarkeit der Aktuatoranordnung.

In einer weiteren bevorzugten Ausgestaltung des Parametrisierungsverfahrens ist der Ansteuerwert der Pumpe ein elektrischer Strom eines Elektromotors, der die Pumpe antreibt.

In dieser Ausgestaltung ist der Druck, den die Pumpe aufbaut, vom elektrischen Strom eines Elektromotors abhängig, der die Pumpe antreibt. Der eingestellte Druck ist gleichzeitig ein wesentlicher Parameter zur Bestimmung des Betriebspunktes der zu betätigenden Kupplung. Diese Ausgestaltung ermöglicht somit, dass der Betriebspunkt als Stromwert angegeben werden kann. Weiterhin ermöglicht das Ansteuern der Pumpe mittels des Stromes eine präzise und schnelle Regelung der Pumpe.

In einer weiteren bevorzugten Ausgestaltung ist der vorbestimmte Betriebspunkt ein Kisspoint einer Reibkupplung, die mittels der hydraulischen Aktuatoranordnung betätigt wird.

In dieser Ausgestaltung betätigt die Aktuatoranordnung eine Reibkupplung und der vorbestimmte Betriebspunkt ist der Einrückpunkt der Kupplung. Als Einrückpunkt bzw. Kisspoint ist der Punkt zu verstehen, an dem die Reibkupplung ein definiertes kleines Drehmoment in der Regel kleiner als 10 Nm überträgt. Der Einrückpunkt kann mittels verschiedenster Verfahren bestimmt werden und deren Parameter dienen als erste Eingangswerte für das erfindungsgemäße Verfahren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung der hydraulischen Aktuatoranordnung sowie eines Kraftfahrzeugantriebsstrangs;
- Fig. 2: den Druckverlauf an einer Reibkupplung über die Zeit;
- Fig. 3: den Drehzahlverlauf einer elektrischen Pumpe in einer Aktuatoranordnung beim Betätigen einer Kupplung über die Zeit;
- Fig. 4: den Stromverlauf eines Elektromotors zum Betreiben einer Pumpe in einer Aktuatoranordnung beim Betätigen einer Kupplung über die Zeit;
- Fig. 5: den Fluidvolumenstrom einer elektrischen Pumpe in einer Aktuatoranordnung beim Betätigen einer Kupplung über die Zeit; und
- Fig. 6: einen schematischen Regelkreis zur Anwendung des erfindungsgemäßen Verfahrens.

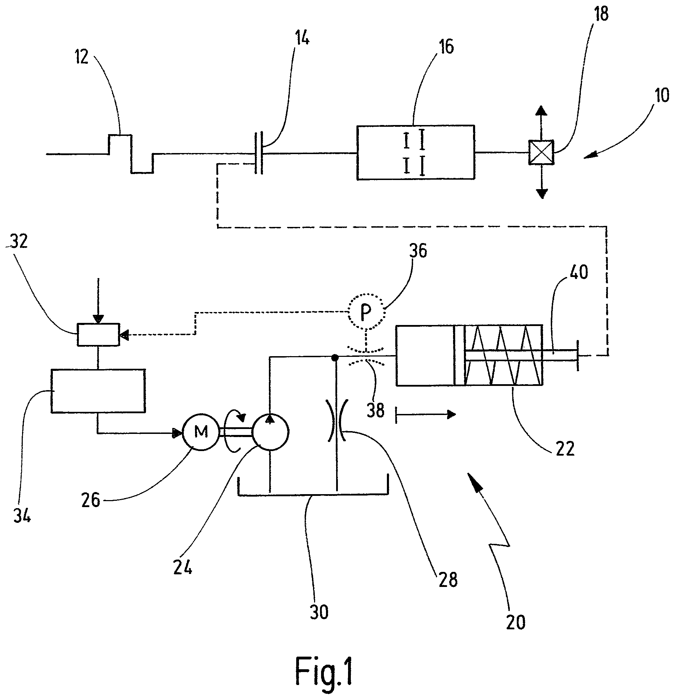

In der Fig. 1 wird mit der Bezugsziffer 10 ein gewöhnlicher Kraftfahrzeugsantriebsstrang angedeutet, mit einem Motor 12, einer Kupplung 14, einem Getriebe 16 und einem Differential 18. Der Motor 12, in der Regel ein Verbrennungsmotor, ist über eine Antriebwelle mit einer Reibkupplung 14 verbunden. Die Kupplung ist ausgangsseitig mit dem Getriebe 16 verbunden, welches an seiner Ausgangsseite ein Differential 18 ansteuert, welches die Räder des Fahrzeuges antreibt.

Die Aufgabe der Kupplung 14 ist es, das Drehmoment des Antriebsmotors 12 auf das Getriebe 16 zu übertragen. Sie ist als Lastkupplung ausgelegt und muss zumindest kurzzeitig auch hohe Drehmomente übertragen können. Für ein komfortables Einkuppeln ist die Reibkupplung vom geöffneten Zustand über einen Schlupfzustand in den geschlossenen Zustand zu überführen. Dies geschieht in diesem Ausführungsbeispiel durch eine hydraulische Aktuatoranordnung 20.

Die hydraulische Aktuatoranordnung 20 umfasst einen hydraulischen Zylinder 22, eine Pumpe 24 und einen Elektromotor 26. Die Pumpe 24 ist ausgangsseitig an ihrem Druckanschluss 25 direkt mit dem Zylinder 22 verbunden. Eine zusätzliche Blende 28 zwischen dem Druckanschluss der Pumpe und dem Tank erhöht die Regelbarkeit der Aktuatoranordnung. Der Tank ist weiterhin mit dem Sauganschluss der Pumpe verbunden, um den Hydraulikkreislauf zu schließen.

Der Elektromotor 26, der die Pumpe 24 antreibt, ist mit einem Steuergerät 34 verbunden. Das Steuergerät 34 regelt die Stromzufuhr zum Motor und somit die Drehzahl w der angeschlossenen Pumpe 24.

Mit der Bezugsziffer 32 ist eine Vorsteuereinheit angedeutet, welche dem Steuergerät 34 vorgelagert ist. Die Vorsteuereinheit 32 verarbeitet den Einstellparameter, der durch das erfindungsgemäßen Verfahrens ermittelt wird und gibt diesen an das Steuergerät 34 weiter.

Optional ist hier auch ein Drucksensor 36 mit einer Blende 38 am Anschluss des Hydraulikzylinders 22 eingezeichnet, der bei dem erfindungsgemäßen Verfahren vorzugsweise jedoch nicht mehr benötigt wird und somit weggelassen werden kann.

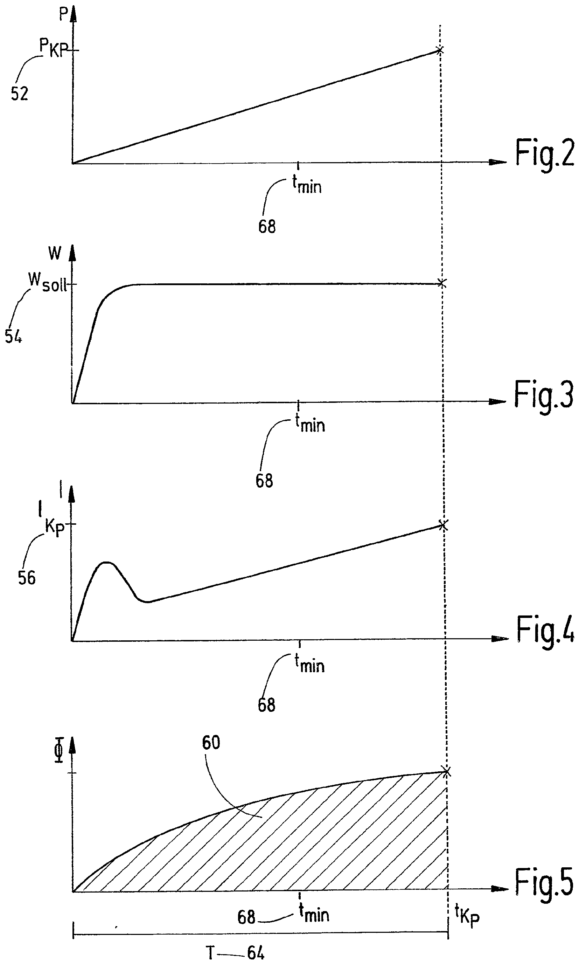

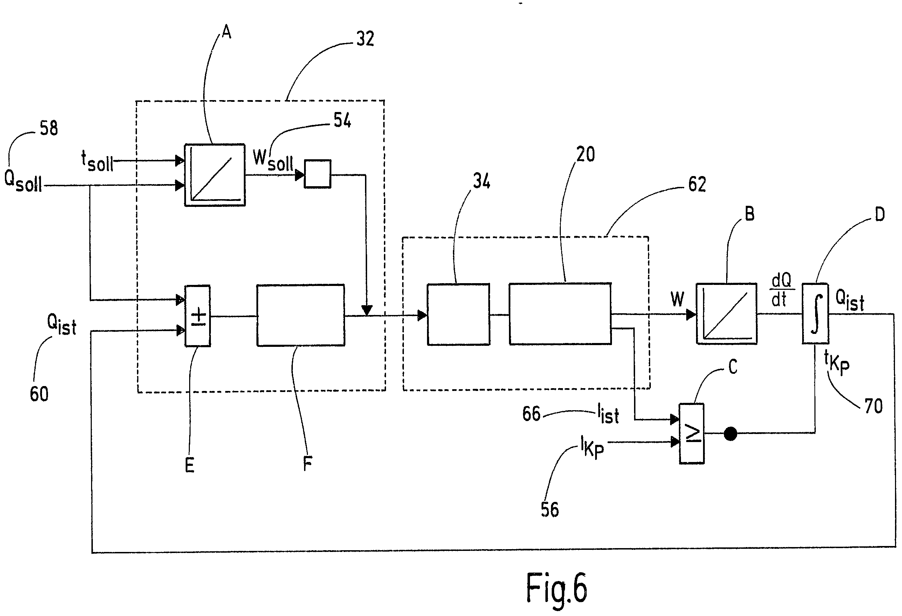

Das Verfahren zur Ermittlung der Einstellparameter für die in Fig. 1 beschriebene Anordnung, wird durch den in der Fig. 6 dargestellten Regelkreis im Detail erläutert. Die Diagramme der Figuren 2, 3, 4 und 5 stellen dabei den jeweiligen Verlauf der relevanten Betriebsparameter der Aktuatoranordnung über die Zeit da. Zu den Betriebsparameter zählen der Druckverlauf P im Hydraulikzylinder 22, die Drehzahl ω der Pumpe 24, der Strom I des Elektromotors 26 und der Fluidvolumenstrom Φ zum Hydraulikzylinder 22.

Die Bezugsziffern A bis F in Fig. 6 kennzeichnen die für das Verfahren relevanten Regelelemente. Die Kennlinien der Pumpe A, B dienen zum einen der Ermittlung einen Drehzahlwertes ωₛₒₗₗ 54 aus einem vorgegeben Volumen Q und einer Zeitdauer t und zum anderen der Ermittlung des Volumenstroms Φ aus einer gegebenen Pumpendrehzahl w. Das Regelelement C vergleicht den momentanen Stromwert I 66 mit dem Betriebpunktansteuerwert I_{KP} 56. Gleichen sich beide Werte ist der Abschluss-Betriebszustand t_{KP} 50 erreicht. Das Integratorelement D integriert über die Funktion des Volumenstroms bis durch C, der Abschluss-Betriebszustand angezeigt wird. Der Komperator E vergleicht Ist- und Soll-Volumen, worauf F die Drehzahl ωₛₒₗₗ der Pumpe 24 nachregelt.

Der mittlere, durch eine schraffierte Linie abgegrenzte Block 62 in Fig. 6 entspricht einem bisher bekannten Steuersystem bestehend aus einem Steuergerät 34 und einer hydraulischen Aktuatoranordnung 20. Unter der Bezugsziffer 32 sind dabei alle Elemente zusammengefasst, die zum Vorsteuergerät 32 gehören.

Ausgangspunkt für das Verfahren ist die Ermittlung eines ersten Satzes von relevanten Betriebsparametern. Dies sind zum einen der Betriebspunkt-Drehzahlwert ωₛₒₗₗ 54 und zum anderen der Betriebspunkt-Ansteuerwert I_{KP} 56 der Aktuatoranordnung 20. Beide Werte sind im Rahmen der Ermittlung des Betriebspunktes 50 des zu betätigenden Elements zu ermitteln. Bei den Parametern handelt es sich folglich, um die Werte, die beim Erreichen des Betriebspunkts als Momentanwerte an der Aktuatoranordnung 20 anliegen.

Ist das zu betätigenden Element bspw. eine Reibkupplung 14, ist der Betriebspunkt 50 der Kisspoint der Kupplung 14. Der Zeitpunkt t_{KP} 70 an dem der Kisspoint erreicht wird, hängt dabei im Wesentlich vom Druck im Hydraulikzylinder ab. Der theoretische Druckverlauf P ist in der Figur 2 dargestellt. Der Druck steigt zunächst rampenförmig an bis der Betriebpunkt 50, in diesem Beispiel der sog. Kisspoint, erreicht ist und die Kupplung zu greifen beginnt. Ab dem Zeitpunkt des Erreichen des Betriebspunkts t_{KP} 70 ist der Druckverlauf P nicht mehr definiert darstellbar.

Die Figuren 3 und 4 zeigen den Verlauf der Betriebsparameter (I, ω) der Aktuatoranordnung über die Zeit. Über die gestrichelte Linie ist der Zeitwert t_{KP} für den Betriebspunkt 50 aus Fig. 1 in diese Diagramme übertragen.

Fig. 3 beschreibt entsprechend der Fig. 2 den Verlauf der Drehzahl ω der Pumpe 24 beim Betätigen der Kupplung 14. Die Pumpe 24 erreicht schnell die geforderte Solldrehzahl und hält diese bis zum Erreichen des Betriebspunkts 50 (Kisspoint) konstant. Der Betriebspunkt-Drehzahlwert ωₛₒₗₗ 54 entspricht dem Wert der Drehzahl beim Erreichen des Betriebspunkts 50.

Analog zu den vorherigen Figuren zeigt Fig. 4 den Stromverlauf I am Elektromotor 26 zum Betreiben der Pumpe 24. Nach anfänglichen Schwankungen beim Starten der Pumpe 24 steigt der Strom I anschließend proportional im Verhältnis zum Druck P an. Der Betriebspunkt-Ansteuerwert I_{KP} 56 entspricht der Höhe des Stroms zum Zeitpunkt des Erreichens des Betriebspunkts 50.

Welches Verfahren zur Ermittlung des Betriebspunkts 50 herangezogen wird ist dabei für das erfindungsgemäße Verfahren unbedeuteten. Es müssen lediglich die aktuellen Parameter (54, 56) beim Erreichen des Betriebspunkts (t_{KP}) gemessen werden und der Steuerung (32, 34) bereitgestellt werden. Bevorzugt ist ein Verfahren, das ohne zusätzliche Drucksensoren den Kisspoint bestimmen kann, um die Vorteile des erfindungsgemäßen Verfahrens bestmöglich zu nutzen. Alternativ kann jedoch jedes andere Verfahren zur Bestimmung des Betriebspunkts verwendet werden.

Auf der Grundlage der ermittelten Parameter wird in einem ersten Verfahrensschritt die Pumpe 24 auf den Betriebspunkt-Drehzahlwert 54 eingeregelt, so dass die Pumpe 24 einen entsprechenden Fluidvolumenstrom Φ fördert. Gleichzeitig beginnt die Integration über den Fluidvolumenstrom Φ über die Zeit. Der Fluidvolumenstrom Φ kann dabei aus der Momentandrehzahl der Pumpe und der zughörigen Pumpenkennlinie ermittelt werden. Mit zunehmendem Volumen im Zylinder steigen die Rückstellkraft und somit auch der notwendige Strom zum Betreiben der Pumpe mit einer konstanten Drehzahl.

Der aktuelle Stromwert Iᵢₛₜ wird dabei kontinuierlich mit dem zuvor ermittelten Betriebpunkt-Ansteuerwert I_{KP} 56 verglichen. Sobald der Stromwert einen vergleichbaren Wert zum Betriebpunkt-Ansteuerwert 56 annimmt wird die Integration gestoppt. Damit die Integration nicht zu früh gestoppt wird ist eine Mindestfüllzeit tₘᵢₙ 68 festgelegt. Dies ist notwendig damit nicht durch Schwankungen im Stromverlauf zu Beginn der Ansteuerung die Integration versehentlich abgebrochen wird, weil durch die Schwankung der Betriebpunkt-Ansteuerwert I_{KP} kurzzeitig schon zu Beginn überschritten worden ist.

Das Ergebnis der Integration liefert die durch das Verfahren zu ermittelnden Parameter. Dies sind zum einen das aktuelle Volumen Qᵢₛₜ 60, das benötigt wird, um den Hydraulikzylinder bis zum Erreichen des Betriebspunkts zu füllen, und zum anderen die entsprechende Zeit T 64 die für diesen Vorgang nötig ist.

Fig. 5 stellte den Vorgang graphisch dar. Entsprechend der vorherigen Figuren ist in diesem Diagramm der Fluidvolumenstrom Φ über die Zeit aufgezeigt. Die schraffierte Fläche entspricht dabei dem durch das Verfahren zu ermittelnde Volumen Qᵢₛₜ 60, das über die Zeitdauer T 64 in den Hydraulikzylinder geströmt ist.

Die beiden Parameter (60, 64) werden an das Vorsteuergerät übertragen. Der Volumenparameter 60 wird mit dem ursprünglichen Volumensollwert 54 an dem Komparator E verglichen, woraufhin der Regler F die Drehzahl der Pumpe für den nächsten Betätigungsvorgang anpasst.

Mit der nächsten Betätigung der Aktuatoranordnung 20 beginnt die Messung erneut, so dass ein Regelkreislauf entsteht und die Einstellparameter der Aktuatoranordnung 20 kontinuierlich angepasst werden.

## Patentansprüche

1. Verfahren zum Ermitteln eines Einstellparameters in einer hydraulischen Aktuatoranordnung (20) für ein Kraftfahrzeugantriebsstrang, wobei die Aktuatoranordnung (20) eine Pumpe (24) und einen Hydraulikzylinder (22) aufweist, wobei ein Druckanschluss (25) der Pumpe (24) mit einem Anschluss des Hydraulikzylinders (22) verbunden ist, wobei der Einstellparameter eine Funktion des Volumens des Fluides ist, das von der Pumpe (24) zur Einrichtung eines vorbestimmten Betriebspunktes (50) der Aktuatoranordnung (20) zu fördern ist, wobei der Betriebspunkt (50) durch ein Wertepaar eines Betriebspunkt-Drehzahlwertes (54) der Pumpe (24) und eines Betriebspunkt-Ansteuerwertes (56) der Pumpe (24) definiert ist, mit den Schritten:
- Einregeln der Pumpe (24) auf den Betriebspunkt-Drehzahlwert (54), so dass die Pumpe einen dem Betriebspunkt-Drehzahlwert (54) entsprechenden Fluidvolumenstrom fördert; und
- Integrieren des Fluidvolumenstromes über die Zeit, bis zu einem Abschluss-Betriebszustand der Aktuatoranordnung (20), bei dem der Ansteuerwert der Pumpe (24) kleiner gleich dem Betriebspunkt-Ansteuerwert (56) ist.

2. Parametrisierungsverfahren nach Anspruch 1, wobei der Einstellparameter das durch den Integrationsschritt erfasste Fluidvolumen (60) aufweist.

3. Parametrisierungsverfahren nach Anspruch 1 oder 2, wobei der Einstellparameter die zum Erreichen des Abschluss-Betriebszustandes benötigte Füllzeit (64) aufweist.

4. Parametrisierungsverfahren nach einem der Ansprüche 1 bis 3, wobei der Abschluss-Betriebszustand, bei dem der Integrationsschritt beendet wird, erreicht wird, wenn ein Abschluss-Ansteuerwert der Pumpe (24), der kleiner gleich dem Betriebspunkt-Ansteuerwert (56) ist, erreicht wird, und eine definierte Mindestfüllzeit (68) überschritten ist.

5. Parametrisierungsverfahren nach einem der Ansprüche 1 bis 4, wobei der Druckanschluss (25) der Pumpe (24) über eine Blende (28) mit einem Niederdruckabschnitt der Aktuatoranordnung (20) verbunden ist.

6. Parametrisierungsverfahren nach einem der Ansprüche 1 bis 5, wobei der Ansteuerwert (56) der Pumpe (24) ein elektrischer Strom eines Elektromotors (26) ist, der die Pumpe (24) antreibt.

7. Parametrisierungsverfahren nach einem der Ansprüche 1 bis 6, wobei der vorbestimmte Betriebspunkt (50) der Einrückpunkt einer Reibkupplung (14) ist, die mittels der hydraulischen Aktuatoranordnung (20) betätigt wird.

8. Verfahren zum Betätigen einer Reibkupplung (14) eines Kraftfahrzeugantriebsstranges mittels einer hydraulischen Aktuatoranordnung (20), die eine Pumpe (24) und einen Hydraulikzylinder (22) aufweist, wobei ein Druckanschluss (25) der Pumpe (24) mit einem Anschluss des Hydraulikzylinders (22) verbunden ist, wobei die Reibkupplung (14) mit einem Kolben (40) des Hydraulikzylinders (22) gekoppelt ist und wobei ein Betriebspunkt (50) der Aktuatoranordnung (20), der einem Betriebspunkt (50) der Reibkupplung (14) entspricht, unter Verwendung eines Einstellparameters eingestellt wird, der mit einem Ermittlungsverfahren gemäß einem der Ansprüche 1 bis 7 ermittelt worden ist.

9. Betätigungsverfahren nach Anspruch 8, wobei der Einstellparameter als Vorsteuerwert in einem Regelkreis verwendet wird, der die Position und/oder den Druck der Reibkupplung (14) mittels der hydraulischen Aktuatoranordnung (20) regelt.

## Claims

1. Method for determining an adjustment parameter in a hydraulic actuator arrangement (20) for a motor vehicle drivetrain, wherein the actuator arrangement (20) has a pump (24) and a hydraulic cylinder (22), wherein a pressure port (25) of the pump (24) is connected to a port of the hydraulic cylinder (22), wherein the adjustment parameter is a function of the volume of the fluid that must be delivered by the pump (24) in order to realize a predetermined operating point (50) of the actuator arrangement (20), wherein the operating point (50) is defined by a value pair of an operating point rotational speed value (54) of the pump (24) and an operating point control value (56) of the pump (24), having the steps:
- regulating the pump (24) to the operating point rotational speed value (54) such that the pump delivers a fluid volume flow rate corresponding to the operating point rotational speed value (54); and
- integrating the fluid volume flow rate over the time until a termination operating state of the actuator arrangement (20), in which the control value of the pump (24) is less than or equal to the operating point control value (56).

2. Parameterization method according to Claim 1, wherein the adjustment parameter has the fluid volume (60) measured by means of the integration step.

3. Parameterization method according to Claim 1 or 2, wherein the adjustment parameter has the filling time (64) required for attaining the termination operating state.

4. Parameterization method according to one of Claims 1 to 3, wherein the termination operating state, in which the integration step is ended, is attained when a termination control value of the pump (24) less than or equal to the operating point control value (56) has been attained and a defined minimum filling time (68) has been exceeded.

5. Parameterization method according to one of Claims 1 to 4, wherein the pressure port (25) of the pump (24) is connected via a baffle (28) to a low-pressure section of the actuator arrangement (20).

6. Parameterization method according to one of Claims 1 to 5, wherein the control value (56) of the pump (24) is an electrical current of an electric motor (26) that drives the pump (24).

7. Parameterization method according to one of Claims 1 to 6, wherein the predetermined operating point (50) is the engagement point of a friction clutch (14) that is actuated by means of the hydraulic actuator arrangement (20).

8. Method for actuating a friction clutch (14) of a motor vehicle drivetrain by means of a hydraulic actuator arrangement (20) which has a pump (24) and a hydraulic cylinder (22), wherein a pressure port (25) of the pump (24) is connected to a port of the hydraulic cylinder (22), wherein the friction clutch (14) is coupled to a piston (40) of the hydraulic cylinder (22), and wherein an operating point (50) of the actuator arrangement (20), which corresponds to an operating point (50) of the friction clutch (14), is adjusted using an adjustment parameter that has been determined by means of a determination method according to one of Claims 1 to 7.

9. Actuating method according to Claim 8, wherein the adjustment parameter is used as a precontrol value in a regulating loop that regulates the position and/or the pressure of the friction clutch (14) by means of the hydraulic actuator arrangement (20).

## Revendications

1. Procédé de détermination d'un paramètre de réglage dans un agencement d'actionneur hydraulique (20) pour une chaîne cinématique d'un véhicule automobile, l'agencement d'actionneur (20) présentant une pompe (24) et un cylindre hydraulique (22), un raccord de pression (25) de la pompe (24) étant connecté à un raccord du cylindre hydraulique (22), le paramètre de réglage étant une fonction du volume de fluide qui doit être refoulé par la pompe (24) jusqu'au dispositif d'un point de fonctionnement prédéterminé (50) de l'agencement d'actionneur (20), le point de fonctionnement (50) étant défini par une paire de valeurs d'une valeur de vitesse de rotation du point de fonctionnement (54) de la pompe (24) et d'une valeur de commande du point de fonctionnement (56) de la pompe (24), comprenant les étapes suivantes :
- réglage de la pompe (24) à la valeur de vitesse de rotation du point de fonctionnement (54), de telle sorte que la pompe refoule un débit volumique de fluide correspondant à la valeur de vitesse de rotation du point de fonctionnement (54) ; et
- intégration du débit volumique de fluide dans le temps, jusqu'à un état de fonctionnement de terminaison de l'agencement d'actionneur (20), dans lequel la valeur de commande de la pompe (24) est inférieure ou égale à la valeur de commande du point de fonctionnement (56).

2. Procédé de paramétrage selon la revendication 1, dans lequel le paramètre de réglage présente le volume de fluide (60) détecté par l'étape d'intégration.

3. Procédé de paramétrage selon la revendication 1 ou 2, dans lequel le paramètre de réglage présente le temps de remplissage (64) nécessaire pour atteindre l'état de fonctionnement de terminaison.

4. Procédé de paramétrage selon l'une quelconque des revendications 1 à 3, dans lequel l'état de fonctionnement de terminaison, auquel l'étape d'intégration est terminée, est atteint lorsqu'une valeur de commande de terminaison de la pompe (24), qui est inférieure égale à la valeur de commande du point de fonctionnement (56), est atteinte, et qu'un temps de remplissage minimum défini (68) est dépassé.

5. Procédé de paramétrage selon l'une quelconque des revendications 1 à 4, dans lequel le raccord de pression (25) de la pompe (24) est connecté par le biais d'un diaphragme (28) à une portion basse pression de l'agencement d'actionneur (20).

6. Procédé de paramétrage selon l'une quelconque des revendications 1 à 5, dans lequel la valeur de commande (56) de la pompe (24) est un courant électrique d'un moteur électrique (26) qui entraîne la pompe (24).

7. Procédé de paramétrage selon l'une quelconque des revendications 1 à 6, dans lequel le point de fonctionnement prédéterminé (50) est le point d'embrayage d'un embrayage à friction (14) qui est actionné au moyen de l'agencement d'actionneur hydraulique (20).

8. Procédé d'actionnement d'un embrayage à friction (14) d'une chaîne cinématique d'un véhicule automobile au moyen d'un agencement d'actionneur hydraulique (20) qui présente une pompe (24) et un cylindre hydraulique (22), un raccord de pression (25) de la pompe (24) étant connecté à un raccord du cylindre hydraulique (22), l'embrayage à friction (14) étant accouplé à un piston (40) du cylindre hydraulique (22) et un point de fonctionnement (50) de l'agencement d'actionneur (20), qui correspond à un point de fonctionnement (50) de l'embrayage à friction (14), étant ajusté en utilisant un paramètre de réglage qui a été déterminé avec un procédé de détermination selon l'une quelconque des revendications 1 à 7.

9. Procédé d'actionnement selon la revendication 8, dans lequel le paramètre de réglage est utilisé en tant que valeur de commande dans un circuit de réglage qui règle la position et/ou la pression de l'embrayage à friction (14) au moyen de l'agencement d'actionneur hydraulique (20).
